# EUROPÄISCHE PATENTSCHRIFT

(11) **EP 1 475 768 B1**
(45) Veröffentlichungstag und Bekanntmachung des Hinweises auf die Patenterteilung: **18.08.2010**
(21) Anmeldenummer: 04101953.0
(22) Anmeldetag: 06.05.2004
(51) Int. Cl.: G09F 15/00, G09F 21/04

(54) **Nutzfahrzeugwechselplakateinrichtung**
Commercial vehicle changing panel system
Dispositif à affiches interchangeables pour véhicule utilitaire

(30) Priorität: 06.05.2003 DE 20307067 U; 03.02.2004 DE 202004001550 U
(43) Veröffentlichungstag der Anmeldung: 10.11.2004
(73) Patentinhaber: SIGN-WARE GmbH & Co. KG, 59846 Sundern (DE)
(72) Erfinder: Miederhoff, Henning, 72458 Albstadt (DE)
(74) Vertreter: Haverkamp, Jens

(56) Entgegenhaltungen:
- FR-A- 2 821 309
- US-A- 5 349 772
- US-A- 5 845 423

## Beschreibung

Die Erfindung betrifft eine Nutzfahrzeugwechselplakateinrichtung für einen Nutzfahrzeugaufbau, insbesondere einen Kofferaufbau und eine Einrichtung zum Aufspannen eines Plakats oder dergleichen an einer Außenseite des Fahrzeugaufbaus, wobei das Plakat in Längserstreckung des Aufbaus mit seinem einen Ende in einem Festlager gehalten und mit seinem anderen, dem in dem Festlager festgelegten Ende des Plakats gegenüberliegenden Ende an eine Horizontalspanneinrichtung zum Spannen des mit seinem einen Ende in dem Festlager festgelegten Plakats in horizontaler Richtung angeschlossen ist und die Horizontalspanneinrichtung der in Fahrtrichtung vorderen Stirnfläche des Aufbaus zugeordnet und somit das Plakat um die in Fahrtrichtung weisende Kante der Seitenfläche des Aufbaus herum geführt ist. Ferner betrifft die Erfindung einen Kofferaufbau für ein Nutzfahrzeug mit einer solchen Nutzfahrzeugwechselplakateinrichtung.

Nutzfahrzeugwechselplakateinrichtungen sind Einrichtungen, mit denen Plakate, insbesondere großformatige Plakate an der Außenseite eines Nutzfahrzeugaufbaus, beispielsweise eines Kofferaufbaus gehalten werden können. Gemäß einem vorbekannten Stand der Technik dient als Nutzfahrzeugwechselplakateinrichtung ein spannbares Wechselrahmensystem, bestehend aus vier Rahmenleisten, von denen jeweils einer einer jeden Seite des aufzuspannenden Plakates zugeordnet sind. Gespannt wird ein solches Plakat durch Spannen der einzelnen Rahmenleisten gegeneinander. Der Einsatz derartiger Wechselsysteme dient dem Zweck, die Außenseiten von Nutzfahrzeugaufbauten, insbesondere von LKW-Aufbauten mit wenigen Handgriffen mit unterschiedlichen Werbeplakaten bestücken zu können. Die Plakate sind in aller Regel aus einem Planenmaterial hergestellt, auf dem außenseitig die Werbebotschaft, beispielsweise im Wege eines Digitaldruckverfahrens aufgebracht ist. Die einzelnen Rahmenteile dieses vorbekannten Systems werden auf einer Außenseite eines Nutzfahrzeugaufbaus angebracht. Aufgrund der notwendigen Einrichtbarkeit der einzelnen Rahmensegmente zueinander sind diese entsprechend aufwendig. Das zu präsentierende Plakat, beispielsweise ein Werbeplakat ist durch diese Rahmenteile nach Art eines Bilderrahmens außenseitig eingefasst. Diese Rahmen sind vorzugsweise an den beiden Längsseiten eines Nutzfahrzeugaufbaus angebracht.

Durch die notwendige Bewegbarkeit der einzelnen Rahmensegmente gegeneinander zum Spannen eines von den Rahmensegmenten eingefassten Plakats sind die Rahmensegmente nicht nur gegeneinander, sondern auch gegenüber dem Nutzfahrzeugaufbau bewegbar. Dieses bedingt, dass die Rahmensegmente eine gewisse Stärke aufweisen. Die Breite von Nutzfahrzeugaufbauten ist jedoch gesetzlich vorgeschrieben beschränkt. Dieses ist bei einem Einsatz eines solchen vorbekannten Systems zu berücksichtigen, insbesondere wenn beide Längsseiten mit solchen Nutzfahrzeugwechselplakateinrichtungen ausgestattet werden sollen und wenn davon ausgegangen wird, dass die Außenbreite eines Nutzfahrzeugaufbaus regelmäßig der maximal zugelassenen Breite entspricht.

Diese vorbekannte Nutzfahrzeugwechselplakateinrichtung wird mitunter auch als zu aufwendig hinsichtlich der einzelnen benötigten Teile angesehen. Überdies ist zu berücksichtigen, dass eine Einrichtbarkeit der einzelnen Rahmensegmente gegeneinander nur in einem beschränkten Umfange möglich ist und dass aus diesem Grunde die in den Rahmen einzusetzenden Plakate mit nur kleinen Toleranzschwankungen hinsichtlich der Abmessungen hergestellt werden müssen.

Eine Nutzfahrzeugwechselplakateinrichtung gemäß dem Oberbegriff des Anspruchs 1 ist aus US 5 845 423 A bekannt. Angeschlossen ist gemäß diesem Stand der Technik das sich über die Längsseite des Aufbaus erstreckende Plakat mit seiner vorderen, um die vordere Stirnseite des Aufbaus herumgeführten Kante an eine sich über die gesamte Höhe des Aufbaus erstreckende Stange einer Horizontalspanneinrichtung. Diese Stange ist unterseitig und oberseitig am Aufbau gelagert. Diese Spannstange weist unterseitig eine Werkzeugaufnahme nach Art eines Sechskants auf, um daran eine Kurbel oder ein Werkzeug anzuschließen. Die Spannstange ist mit einer federbelasteten Klinke zum Sperren der Drehrichtung entgegen der Spannrichtung ausgerüstet.

Zwar lässt sich mit einer solchen Horizontalspanneinrichtung das Plakat in einem gewissen Maße spannen, es hat sich jedoch gezeigt, dass zum ausreichenden Spannen eines solchen, sich über die gesamte Längserstreckung eines Nutzfahrzeugaufbaus, insbesondere wenn es sich bei diesem um einen Auflieger handelt, eine hohe Spannkraft benötigt wird. Eine solche Spannkraft kann sich mit einer über die gesamte Höhe des Fahrzeugaufbaus erstreckenden Spannstange nicht gleichmäßig über die gesamte Breite (Höhe) des Plakats auf das Plakat übertragen werden, weshalb bei einer solchen Ausgestaltung das Plakat zu einem Faltenwurf neigt. Begründet liegt dieses darin, dass die Spannstange an ihrem unteren Ende betätigt und somit gespannt wird und die Drehbewegung zu einem Tordieren der Spannstange führt und somit auf den unteren antriebsnahen Abschnitt auf das Plakat eine größere Zugspannung ausgeübt wird als in seinem oberen Abschnitt.

Aus diesem Dokument ist des Weiteren bekannt, anstelle einer einzigen Spannstange als Spanneinrichtung mehrere einzelne Spannvorrichtungen vorzusehen. Bei diesen Spannvorrichtungen handelt es sich letztendlich um klein dimensionierte Horizontalspanner, bei denen anstelle einer langen, sich über die gesamte Höhe des Aufbaus erstreckenden Spannstange nur ein jeweils kurzer Spannstangenabschnitt vorgesehen ist. An dem zu spannenden Ende des Plakates befinden sich gurtartige Fortsätze, die zum Spannen des Plakates in die einzelnen Spanneinrichtungen eingefädelt werden müssen, bevor die Spanneinrichtungen durch Verwenden jeweils einer Kurbel oder eines Werkzeuges gespannt werden können. Diese mit den Spanneinrichtungen in Eingriff zu stellenden Spanngurte sind an eine durch eine randseitige Schlaufe des Plakats geführte Stange angeschlossen, welche plakatseitige Schlaufe an den Stellen des Anschlusses der Spanngurte jeweils Aussparungen aufweist.

Ausgehend von diesem diskutierten Stand der Technik liegt der Erfindung daher die Aufgabe zugrunde, eine Fahrzeugwechselplakateinrichtung der oben genannten Art dergestalt weiterzubilden, dass das Aufspannen eines sich über die Seite eines Aufbaus eines Fahrzeuges erstreckenden Plakates nicht nur mit einer einfacheren Handhabung, insbesondere zum Erzielen eines faltenwurffreien Spannens möglich ist.

Diese Aufgabe wird erfindungsgemäß durch eine Nutzfahrzeugwechselplakateinrichtung der eingangs genannten Art gelöst, bei der die Horizontalspanneinrichtung wenigstens einen ein Hakenelement aufweisenden Planenspanner zum Anschließen des Plakats an den Fahrzeugaufbau und zum Spannen des Plakats umfasst und der zumindest eine Planenspanner am Aufbau des Fahrzeugs festgelegt ist und dass der an dem mit dem Hakenelement des Planenspanners in Eingriff zu stellende Rand des Plakats an eine Schiene mit einem Einhakschenkel angeschlossen ist, den das Hakenelement des Planenspanners zum Spannen des Plakats hintergreift.

Bei der beanspruchten Nutzfahrzeugwechselplakateinrichtung ist das Plakat mit seinem vorderen Rand an eine Schiene mit einem Einhakschenkel angeschlossen. Diese sich über die Höhe des Plakats erstreckende Schiene dient zum gleichmäßigen Spannen des Plakates. Als Spannelemente dienen am Aufbau des Fahrzeugs festgelegte Planenspanner, die ihrerseits jeweils ein Hakenelement aufweisen, das zum Spannen des Plakats mit dem Einhakschenkel der an der zu spannenden Seite des Plakats angeordneten Schiene in Eingriff gestellt wird. Die Betätigung eines solchen an sich bekannten Planenspanners ist denkbar einfach. Zum Spannen des Plakates ist es lediglich notwendig, das Hakenelement des oder der eingesetzten Planenspanner an dem Einhakschenkel der Schiene des Plakats einzuhaken und zu spannen. Die an dem Plakat angeschlossene Schiene dient einer Kraftverteilung und ist als solche starr, was durch ihre Geometrie infolge des Vorhandenseins des Einhakschenkels als versteifendes Element unterstützt wird. Da der Spannweg der Hakenelemente der Planenspanner gleich ist, insbesondere wenn die Spannbewegung mittels eines Spannhebels vorgenommen wird, wird das Plakat an denjenigen Stellen, an denen ein Planenspanner angeschlossen ist, jeweils gleichermaßen gespannt, so dass die Gefahr eines Faltenwurfes beim Spannen grundsätzlich vermieden ist.

Unter den im Rahmen dieser Ausführungen verwendeten Begriff "Plakat" ist grundsätzlich jedwede Materialbahn zu verstehen, die sich außenseitig beispielsweise in einer Werbebotschaft versehen lässt und die der benötigten Spannkraft standhält. Dies sind beispielsweise Gewebe, Folien und insbesondere Kunststoffbahnen, wie sie beispielsweise als Nutzfahrzeugplanen bekannt sind. Ein Spannen des Plakates in vertikaler Richtung wird grundsätzlich als nicht notwendig angesehen, insbesondere dann, wenn in horizontaler Richtung das Plakat mit einer entsprechend hohen Spannkraft gespannt werden kann. Gleichwohl besteht grundsätzlich auch die Möglichkeit bei Einsatz der Nutzfahrzeugwechselplakateinrichtung das mit dieser in horizontaler Richtung gespannte Plakat zusätzlich auch in vertikaler Richtung zu spannen, sollte dies gewünscht sein. Ferner kann vorgesehen sein, dass die längsseitigen Enden des Plakates auch ohne ein vertikales Spannen des Plakats an dem Nutzfahrzeugaufbau angeschlossen sind. Dies kann beispielsweise durch eine Flausch-Klett-Verbindung oder durch Verwendung jeweils einer am Fahrzeugaufbau angeordneten Kederschiene realisiert sein, in die der mit einem Keder versehene Längsrand des Plakats jeweils eingreift.

Die Horizontalspanneinrichtung verfügt über einen oder mehrere, zweckmäßigerweise zwei mit Abstand zueinander angeordnete Planen- oder Gurtspanner, mit denen das Plakat in horizontaler Richtung spannbar ist. Zweckmäßigerweise werden Planenspanner eingesetzt, wie diese zum Spannen von Seitenplanen eines Lastkraftwagens bekannt sind. Dabei ist vorgesehen, dass die Planenspanner an dem Fahrzeugaufbau angeschlossen sind. Die Horizontalspanner verfügen über ein Hakenelement, das je nach Anbindung des Planenspanners an der Plane oder am Fahrzeugaufbau mit einem komplementären Spannelement zusammenwirkt. Bevorzugt ist eine Ausgestaltung, bei der die Planenspanner am Fahrzeugaufbau befestigt sind und an dem zu spannenden Ende der Plane eine Schiene mit einem hakenartigen Schenkel angeordnet ist. Die Hakenelemente der Planenspanner können dann den hakenartig ausgebildeten Schenkel der Schiene zum Spannen des Plakates hintergreifen. Die Planenspanner sind zweckmäßigerweise einrichtbar, so dass auf diese Weise ohne weiteres Toleranzen des Fahrzeugaufbaus, beispielsweise des Kofferaufbaus ausgeglichen werden können und ein Spannen des Plakats um die in Fahrtrichtung vordere Stirnkante des Aufbaus hinweg keinen Faltenwurf zur Folge hat.

Von Vorteil ist bei diesen Nutzfahrzeugwechselplakateinrichtungen auch, dass sich das Plakat im wesentlichen über die gesamte Höhe eines Nutzfahrzeugaufbaus erstrecken kann, so dass die mit dem Plakat überspannte Außenseite des Nutzfahrzeugaufbaus ein glattes Äußeres erhält und somit Nieten, Beschädigungen oder dergleichen am Nutzfahrzeugaufbau überspannt sind. Bei dieser Nutzfahrzeugwechselplakateinrichtung ist es zudem möglich, ein Plakat an der Längsseite eines Nutzfahrzeugaufbaus aufzuspannen, wobei die Breite des Nutzfahrzeugaufbaus lediglich durch die Stärke der Plane vergrößert wird. Bei dieser Nutzfahrzeugwechselplakateinrichtung ist es möglich, das Festlager und die Horizontalspanneinrichtung den Schmalseiten des Nutzfahrzeugaufbaus zuzuordnen, wobei dann die Plane über die vertikal verlaufenden Kanten des Aufbaus gezogen wird.

Vorteilhaft ist eine Ausgestaltung, bei der das dem Festlager zugeordnete Ende des Plakates einen Kederrand aufweist, der in einer Kederschiene als Teil des Aufbaus gehalten ist. Gemäß einer weiteren Ausgestaltung ist das Festlager des Plakates lösbar konzipiert. Bei einer solchen Ausgestaltung ist eine Montageschiene am Fahrzeugaufbau angeordnet, an die eine an dem dem Festlager zugeordneten Rand des Plakats vorgesehene Schiene angeschlossen werden kann. Die Montageschiene kann beispielsweise abragende und mit einem Kopf versehene Haltebolzen aufweisen, an denen die an dem Plakat befindliche Schiene aufgehängt wer den kann. Zu diesem Zweck verfügt die am Plakat befindliche Schiene über sich in vertikaler Richtung erstreckende schlüssellochförmige Montageöffnungen zum Einführen der Haltebolzen. Gemäß einer weiteren Ausgestaltung ist am Fahrzeugaufbau eine einen hinterschnittenen Schenkel aufweisende Montageschiene vorgesehen. Die an dem Plakat befindliche Schiene verfügt über einen Hakenabschnitt, mit dem der hinterschnittene Schenkel der Montageschiene hintergriffen werden kann. Nach Anschließen der am Plakat befindlichen Schiene an die Montageschiene und nach Spannen des Plakats mit der Horizontalspanneinrichtung ist auch die an dem Plakat befindliche, dem Festlager zugeordnete Schiene unverlierbar an der Montageschiene und somit am Kofferaufbau gehalten.

Die Horizontalspanneinrichtung befindet sich zweckmäßigerweise an der in Fahrtrichtung weisenden Stirnfläche des Nutzfahrzeugaufbaus. Somit wird bei dieser Ausgestaltung das Plakat um die in Fahrtrichtung weisende vertikale Kante des Nutzfahrzeugaufbaus herumgezogen, so dass ein Eintreten von Fahrtwind zwischen die Plane und den Nutzfahrzeugaufbau verhindert ist. Bei einer solchen Ausgestaltung wird die zulässige Breite des Nutzfahrzeugaufbaus nicht durch die Horizontalspanneinrichtung beeinträchtigt.

Nachfolgend ist die Erfindung anhand eines Ausführungsbeispiels unter Bezugnahme auf die beigefügten Figuren beschrieben. Es zeigen:

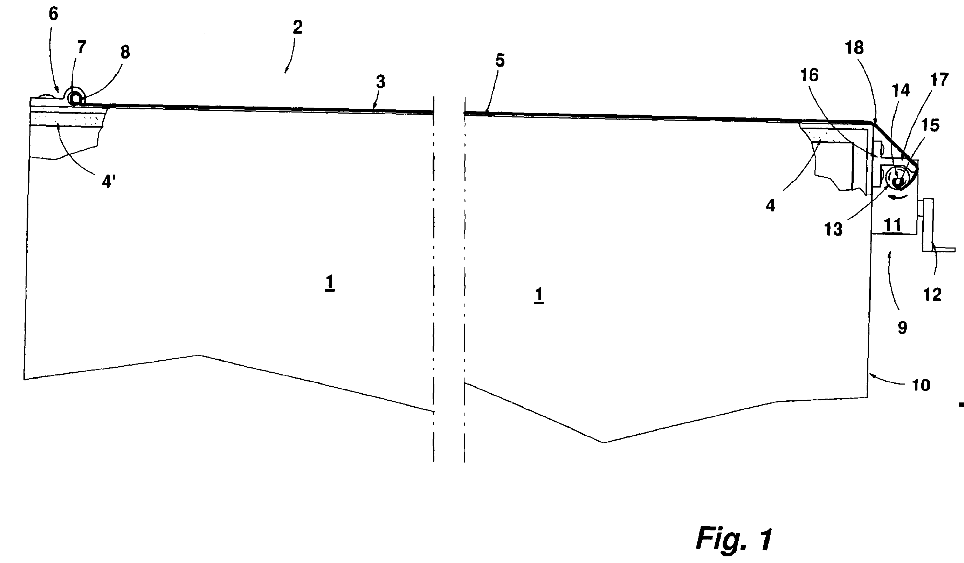

- **Fig. 1:**: eine schematisierte, zum Teil geschnittene Draufsicht auf den Aufbau eines Nutzfahrzeuges mit einer Nutzfahrzeugwechsel- plakateinrichtung gemäß dem Stand der Technik,
- **Fig. 2:**: eine schematisierte Ansicht der in Fahrtrichtung weisenden Seite des Nutzfahrzeugaufbaus der Figur 1,
- **Fig. 3:**: eine schematisierte zum Teil geschnittene Draufsicht des in Fahrtrichtung weisenden vorderen Bereichs eines Nutzfahr- zeugaufbaus mit einer Nutzfahrzeugwechselplakateinrichtung mit einer Horizontalspanneinrichtung gemäß der Erfindung,
- **Fig. 4**: eine schematisierte zum Teil geschnittene Darstellung des rückwärtigen Abschlusses des Nutzfahrzeugaufbaus der Figur 3 und
- **Fig. 5**: eine vergrößerte Darstellung einer an einem zu spannenden Plakat angeordneten Schiene mit einer Kederbremse.

Ein Kofferaufbau 1 eines im übrigen nicht näher dargestellten Nutzfahrzeuges - eines Lastkraftwagens - ist mit einer insgesamt mit dem Bezugszeichen 2 bezeichneten Nutzfahrzeugwechselplakateinrichtung ausgerüstet. Die Nutzfahrzeugwechselplakateinrichtung 2 dient zum Aufspannen eines Plakates 3 an der in Fahrtrichtung linken Längsseite des Kofferaufbaus 1. Bei dem Kofferaufbau 1 handelt es sich um einen herkömmlichen bekannten Kofferaufbau, dessen äußere Verkleidung 3 an Holmen 4, 4' festgelegt ist.

Die Nutzfahrzeugwechselplakateinrichtung 2 verfügt im Bereich des hinteren Abschlusses der Längsseite 5 des Kofferaufbau 1 über eine als Festlager dienende Kederschiene 6. Die Kederschiene 6 ist an dem hinteren Holm 4' befestigt und somit Teil des stabilen Kofferaufbaus 1. Die Kederschiene 6 verfügt über eine Kedernut 7, in die der hintere Endbereich des Plakates 3 mit seinem Kederrand 8 eingesetzt ist.

Das Plakat 3 besteht aus einem verstärkten Planenstoff, beispielsweise einem solchen, der auch bei Planenaufbauten von Lastkraftwagen zum Einsatz kommt. Die Außenseite des Plakats 3 ist bedruckt.

Zum Spannen des Plakats 3 dient eine der Nutzfahrzeugwechselplakateinrichtung 2 zugehörige Horizontalspanneinrichtung 9, die am Kofferaufbau 1 an der in Fahrtrichtung nach vorne weisenden Stirnfläche 10 befestigt ist. Die Horizontalspanneinrichtung 9 umfasst ein in einem Gehäuse befindliches selbsthemmendes Getriebe 11, das über eine Kurbel 12 antreibbar ist. Die Kurbel 12 ist über ein Kupplungsstück mit dem Getriebe 11 verbindbar und entsprechend auch von diesem lösbar. Auf die Abtriebswelle des Getriebes 11 ist eine Spannstange 13 aufgesteckt, die ihrerseits ebenfalls über eine Kedernut 14 verfügt. In die Kedernut 14 der Spannstange 13 ist der der Kederschiene 6 gegenüberliegende Randabschnitt des Plakates 3, gleichfalls als Kederrand 15 ausgebildet, eingesetzt. Zum Lagern der Spannstange 13 dient ein am Kofferaufbau 1 befestigtes Lagerprofil 16, das über einen vom Kofferaufbau 1 abragenden Schenkel 17 verfügt. Der Schenkel 17 ist in seinem vorderen Bereich von der Längsseite des Kofferaufbaus 1 wegweisend abgekantet. In der durch das Lagerprofil 16 gebildeten Nut ist die Spannstange 13 angeordnet. Durch Betätigen der Kurbel 12 und dementsprechend des Getriebes 12 wird die Spannstange 13 zum Spannen des Plakates 3 im Uhrzeigersinn bewegt, so dass das der Spannstange 13 zugeordnete Ende des Plakates 3 um die Spannstange 13 gewickelt wird. Dabei wird das Plakat 3 über die in Fahrtrichtung nach vorne weisende Kante 18 des Kofferaufbaus 1 und auch über den äußeren Abschluss des Schenkels 17 des Lagerprofils 16 gezogen. Da sich die Horizontalspanneinrichtungen 9 auf der in Fahrtrichtung weisenden Seite 10 des Kofferaufbaus 1 befindet, ist wirksam ein Eindringen von Fahrtwind hinter das über die Längsseite 5 gespannte Plakat verhindert.

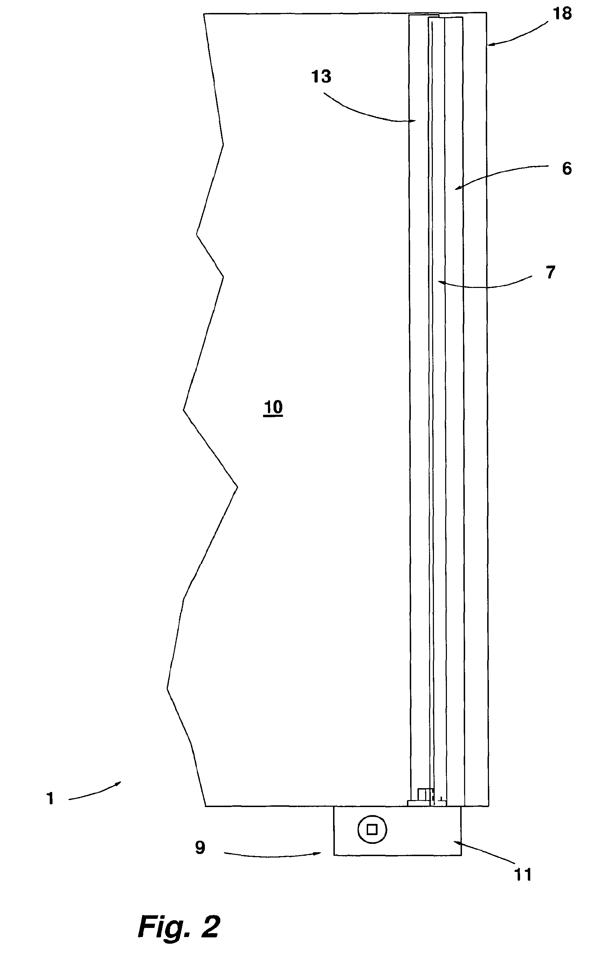

Die Anordnung der Horizontalspanneinrichtung 9 an der in Fahrtrichtung weisenden Stirnfläche 10 des Kofferaufbaus 1 ist nochmals in der Darstellung der Figur 2 gezeigt. Zum Darstellen der Einzelheiten ist das Plakat 3 mit seinem Kederrand 15 bei dieser Darstellung nicht in die Spannstange 13 eingesetzt.

Grundsätzlich ist das Getriebe 11 am Kofferaufbau 1 befestigt und stellt somit durch seine Abtriebswelle, auf der die Spannstange 13 aufgelegt ist, eine erste Lagerstelle für die Spannstange 13 dar. Anstelle des in den Figuren gezeigten Lagerprofils 16 ist es gleichfalls möglich, die Spannstange lediglich in ihrem obersten Abschnitt zu lagern, beispielsweise durch Vorsehen einer Lagergabel, in die die Spannstange eingesetzt werden kann. Diese Lagerstelle befindet sich zweckmäßigerweise im Bereich des Übergangs der Seitenfläche 10 zum Dach des Kofferaufbaus 1.

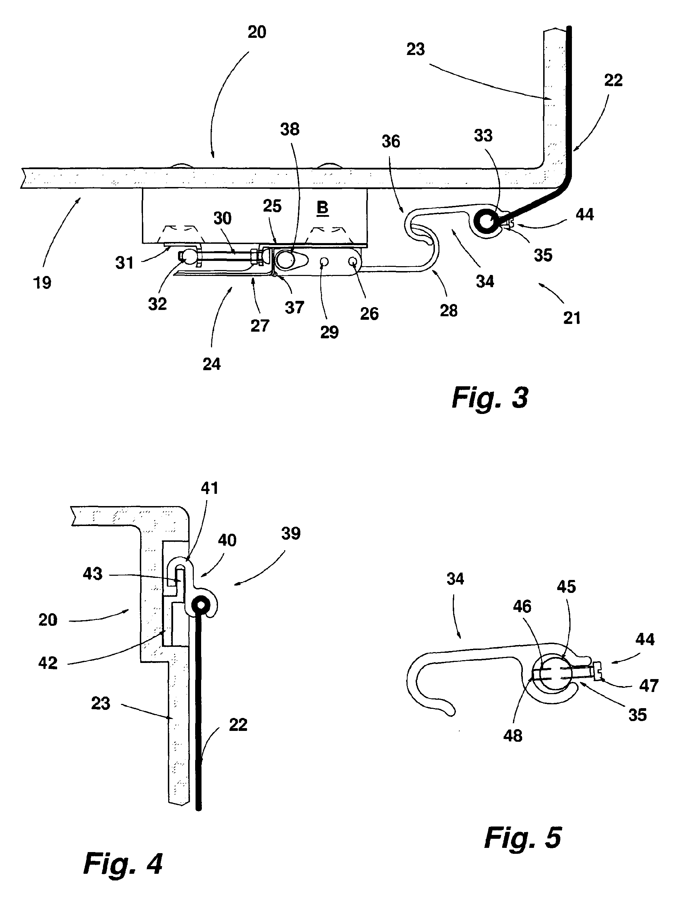

Figur 3 zeigt zum Teil längsgeschnitten die in Fahrtrichtung weisende vordere Stirnseite 19 eines schematisiert dargestellten Kofferaufbaus 20 eines Nutzfahrzeuges. Der Kofferaufbau 20 trägt eine Nutzfahrzeugwechselplakateinrichtung 21. Der Nutzfahrzeugwechselplakateinrichtung 21 zugehörig ist ein Werbeplakat 22 aus einer Kunststoffplane, auf dessen Außenseite eine Werbebotschaft aufgedruckt ist. Das Werbeplakat 22 ist im Bereich des hinteren Abschlusses der in Fahrtrichtung linken Längsseite 23 des Kofferaufbaus 20 in einem Festlager gehalten. Die Nutzfahrzeugwechselplakateinrichtung 21 umfasst eine Horizontalspanneinrichtung mit zwei an der Stirnseite 19 mit Abstand zueinander vertikal übereinander angeordneten Planenspannern 24. In Figur 3 ist lediglich ein Planenspanner 24 erkennbar. Der Planenspanner 24 ist auf einem Bock B angeordnet, der seinerseits mittels Nieten an dem Kofferaufbau 20 befestigt ist. Der Planenspanner 24 umfasst ein Unterteil 25, an dem mittels einer Schwenkachse 26 ein Spannhebel 27 angelenkt ist. Die Schwenkachse 26 ist in zwei von dem Unterteil 25 abgekanteten Seitenwangen, die zusammen mit dem Unterteil ein Grundmodul definieren, gelagert. Schwenkbar ist an dem Spannhebel 27 ein Hakenelement 28 angelenkt. Die Schwenkachse des Hakenelementes 28 gegenüber dem Spannhebel 27 ist in Figur 3 mit dem Bezugszeichen 29 gekennzeichnet. Angeschlossen mittels einer Gewindestange 30 ist an das Unterteil 25 ein Befestigungswinkel 31, der seinerseits in nicht dargestellter Art und Weise an dem Bock B befestigt ist. Die Gewindestange 30 greift mit ihrem Gewinde in einen mit einem Innengewinde versehenen Bolzen 32 ein. Durch die Gewindestange 30 ist das Unterteil 25 bzw. das Grundmodul des Planenspanners 24 zusammen mit dem Spannhebel 27 und dem Hakenelement 28 gegenüber dem Befestigungswinkel 31 hinsichtlich des Abstandes des Befestigungswinkels 31 zu dem Grundmodul einrichtbar.

Beim Einsatz von zwei Planenspannern 24, wie zu Figur 3 beschrieben, können Toleranzen des Kofferaufbaus 20, die ansonsten zu einem Faltenwurf des um die vordere Kante des Kofferaufbaus 20 herumgeführten Werbeplakate 22 zur Folge hätten, ohne weiteres ausgeglichen werden.

An dem dem festgelegten Ende des Werbeplakats 22 gegenüberliegenden Ende verfügt das Werbeplakat 22 über einen Keder 33. Der Keder 33 dient zum Anschließen des Werbeplakats 22 an eine Schiene 34 mit einer Kedernut 35 und einem Hakenabschnitt 36. Die Schiene 34 erstreckt sich im wesentlichen über die gesamte Höhe des Werbeplakats 22. Zum Spannen des Werbeplakats 22 greifen die Hakenelemente 28 der Planenspanner 24 in den Hakenabschnitt 36 der Schiene 34 ein, so dass durch Umlegen der Spannhebel 27 das Werbeplakat 22 in horizontaler Richtung gespannt werden kann. Figur 3 zeigt das mit der durch die Planenspanner 24 gebildeten Horizontalspanneinrichtung gespannte Werbeplakat 22

Die bei dem dargestellten Ausführungsbeispiel verwendeten Planenspanner 24 sind als Übertotpunktspanner ausgebildet. Zusätzlich ist die geschlossene Stellung der Spannhebel 27 gegenüber der Unterteile 25 durch ein Federelement 37 gesichert, dass die hintere Kante einer Griffplatte des Spannhebels 27 in der geschlossenen Stellung hintergreift. Zur zusätzlichen Sicherung der Geschlossenstellung der Planenspanner 24 kann ein Sicherungsstift 38 dienen, der sowohl durch die Seitenwangen des Unterteils 25 als auch durch mit den Öffnungen der Seitenwangen fluchtenden Öffnungen der Seitenwangen des Spannhebels 27 hindurch geführt ist. Zweckmäßigerweise weist ein solcher Sicherungsstift 38 an seiner Oberseite einen Kopf auf, damit der Sicherungsstift 38 nicht durch die Öffnungen hindurchfällt. Sollte es gewünscht sein, kann an der Unterseite des Stiftes 38 ein Schloss angebracht sein, um eine unerlaubte Entfernung des Sicherungsstiftes 38 zu verhindern. Anstelle des Sicherungsstiftes 38 kann auch ein Schloss eingesetzt werden, um die Planenspanner 24 sicher geschlossen zu halten.

Bei der Ausgestaltung gemäß Figur 3 ist das Werbeplakat 22 in nicht dargestellter Art und Weise sowohl oberseitig und unterseitig mit seinem Längsrand in einer dem Aufbau zugeordneten Kedernut mittels eines Keders gehalten. In einem solchen Fall ist es zweckmäßig, das Festlager im Bereich des hinteren Abschlusses des Nutzfahrzeugaufbaus als lösbares Lager auszugestalten. Figur 4 zeigt beispielhaft anhand der Nutzfahrzeugwechselplakateinrichtung 21 eine mögliche Ausgestaltung eines lösbaren Festlagers 39. Das Werbeplakat 22 ist an seinem der Horizontalspanneinrichtung gegenüberliegenden rückwärtigen Ende in einer Kederschiene 40 gehalten. Die Kederschiene 40 verfügt über einen Hakenabschnitt 41 mit einer zum Kofferaufbau 20 hinweisenden Öffnung. Am Kofferaufbau 20 ist eine verkröpfte Montageschiene 42 befestigt, die über einen in Fahrtrichtung nach hinten weisenden freien, einen Hinterschnitt bildenden Schenkel 43 verfügt. An dem Schenkel 43 kann die Kederschiene 40 mit ihrem Hakenabschnitt 41 eingehängt werden. Da sich die Montageschiene 42 in einer unterseitig abgeschlossenen Vertiefung des Kofferaufbaus 20 befindet, ist die Kederschiene 40 in vertikaler Richtung fixiert und kann nicht nach unten herausrutschen. Ist das Werbeplakat 22 durch die durch die Planenspanner 24 gebildete Horizontalspanneinrichtung gespannt, ist die Kederschiene 40 unverlierbar an der Montageschiene 42 des Aufbaus 20 gehalten.

Damit die Schiene 34 unverlierbar an das Werbeplakat 22 angeschlossen ist, insbesondere auch dann, wenn die Anordnung, gebildet aus dem Werbeplakat 22 und der Schiene 34, nicht über die Planenspanner 24 unter Zugspannung gehalten ist, ist in die Kedernut 35 der Schiene 34 eine Kederbremse 44 eingesetzt. Die Kederbremse 44 ist in Figur 5 in einer vergrößerten Darstellung der Schiene 34 ohne den eingesetzten Keder 33 des Werbeplakats 20 gezeigt. Die Kederbremse 44 verfügt über einen zylindrischen Bolzenabschnitt 45, dessen Durchmesser größer ist als die Zugangsöffnung der Kedernut 35. Den Bolzenabschnitt 45 quert eine Gewindebohrung 46. Eingesetzt in die Gewindebohrung 46 ist eine Feststellschraube 47, die sich zum Aktivieren der Kederbremse 44 mit ihrem Fuß 48 an der Innenwand der Kedernut 35 abstützt und dadurch die dem Fuß 48 der Feststellschraube 47 gegenüberliegenden Mantelbereiche des Bolzenabschnitts 45 gegen die die Zugangsöffnung der Kedernut 35 begrenzenden inneren Mantelfläche der Kedernut 35 presst. Eingesetzt wird die Kederbremse 44 in die Kedernut durch seitliches Einschieben zusammen mit dem Keder 33 des Werbeplakats 20. Die Kederbremse 44 befindet sich in einer Ausklinkung innerhalb des Keders 33 des Werbeplakats 22, so dass in axialer Richtung benachbart zu der Kederbremse 44 zu beiden Seiten der in die Kedernut 35 eingesetzte Keder 33 des Werbeplakats 22 angeordnet ist. Aktiviert wird die Kederbremse 44 erst, wenn diese zusammen mit dem Keder 33 des Werbeplakats 22 in die Kedernut 35 der Schiene 34 eingesetzt ist. Durch das Einfassen der aktivierten Kederbremse 44 durch die benachbarten Kederabschnitte des Werbeplakats 22 ist wirksam ein Herausrutschen des Keders 33 aus der Kedernut 35 der Schiene 34 verhindert. Im Zusammenhang dieser Ausführungen ist die Kederschiene 44 als Teil der Nutzfahrzeugwechselplakateinrichtung 21 beschrieben. Aus den Ausführungen wird jedoch deutlich, dass sich die Kederbremse 44 oder eine entsprechend gleichartige auch unabhängig von einer Nutzfahrzeugwechselplakateinrichtung für zahlreiche weitere Anwendungsfälle eignet.

Grundsätzlich ist bei der beschriebenen Nutzfahrzeugwechselplakateinrichtung eine Befestigung des Plakates in seinem oberen und unteren Abschluss am Kofferaufbau nicht notwendig. Sollte gleichwohl eine Befestigung des Plakates entlang seiner oberen und unteren Längskante am Kofferaufbau gewünscht sein, bietet es sich an, eine solche Befestigung über ein am Kofferaufbau befindliches Flauschband und ein am Plakat befindliches Klettband oder umgekehrt herbeizuführen. Gleichfalls können anstelle der beschriebenen Klettband- und Flauschbandfixierung auch Kederschienen am Kofferaufbau angebracht sein, in die die Längsseiten des Plakates eingezogen sind. Auch bei einer solchen Ausgestaltung wird deutlich, dass ein Spannen des Plakates mit der beschriebenen Nutzfahrzeugwechselplakateinrichtung in horizontaler Richtung unter Ausnutzung der ohnehin starren Eigenschaften eines Kofferaufbaus vorgenommen wird. Daher sind zusätzliche Elemente zum Abstützen der beiden Spannwiderlager gegeneinander nicht erforderlich. Die beschriebene Nutzfahrzeugwechselplakateinrichtung ist mit wenigen, einfachen Elementen realisierbar, so dass der Aufwand beim Erwerb einer solchen Einrichtung nicht erheblich ist.

### Bezugszeichenliste

- 1: Kofferaufbau
- 2: Nutzfahrzeugwechselplakateinrichtung
- 3: Verkleidung
- 4, 4': Holm
- 5: Längsseite
- 6: Kederschiene
- 7: Kedernut
- 8: Kederrand
- 9: Horizontalspanneinrichtung
- 10: Stirnfläche
- 11: Getriebe
- 12: Kurbel
- 13: Spannstange
- 14: Kedernut
- 15: Kederrand
- 16: Lagerprofil
- 17: Schenkel
- 18: Kante
- 19: Stirnseite
- 20: Kofferaufbau
- 21: Nutzfahrzeugwechselplakateinrichtung
- 22: Werbeplakat
- 23: Längsseite
- 24: Planenspanner
- 25: Unterteil
- 26: Schwenkachse
- 27: Spannhebel
- 28: Hakenelement
- 29: Schwenkachse
- 30: Gewindestange
- 31: Befestigungswinkel
- 32: Bolzen
- 33: Keder
- 34: Schiene
- 35: Kedernut
- 36: Hakenabschnitt
- 37: Federelement
- 38: Sicherungsstift
- 39: Festlager, lösbar
- 40: Kederschiene
- 41: Hakenabschnitt
- 42: Montageschiene
- 43: Schenkel
- 44: Kederbremse
- 45: Bolzenabschnitt
- 46: Gewindebohrung
- 47: Feststellschraube
- 48: Fuß der Feststellschraube

## Patentansprüche

1. Nutzfahrzeugwechselplakateinrichtung für einen Nutzfahrzeugaufbau (1, 20), insbesondere einen Kofferaufbau und eine Einrichtung zum Aufspannen eines Plakats (3, 22) oder dergleichen an einer Außenseite des Fahrzeugaufbaus (20), wobei das Plakat (3, 22) in Längserstreckung des Aufbaus (20) mit seinem einen Ende in einem Festlager (6, 39) gehalten und mit seinem anderen, dem in dem Festlager (6, 39) festgelegten Ende des Plakats (3, 22) gegenüberliegenden Ende an eine Horizontalspanneinrichtung (24) zum Spannen des mit seinem einen Ende in dem Festlager (6, 39) festgelegten Plakats (3, 22) in horizontaler Richtung angeschlossen ist und die Horizontalspanneinrichtung (24) der in Fahrtrichtung vorderen Stirnfläche (10, 19) des Aufbaus (1, 20) zugeordnet und somit das Plakat (3, 22) um die in Fahrtrichtung weisende Kante (18) der Seitenfläche (5, 23) des Aufbaus (1, 20) herum geführt ist, **dadurch gekennzeichnet, dass** die Horizontalspanneinrichtung wenigstens einen ein Hakenelement (28) aufweisenden Planenspanner (24) zum Anschließen des Plakats (22) an den Fahrzeugaufbau (20) und zum Spannen des Plakats (22) umfasst und der zumindest eine Planenspanner (24) am Aufbau (20) des Fahrzeugs festgelegt ist und dass der an dem mit dem Hakenelement (28) des Planenspanners (24) in Eingriff zu stellende Rand des Plakats (22) an eine Schiene (34) mit einem Einhakschenkel (36) angeschlossen ist, den das Hakenelement (28) des Planenspanners (24) zum Spannen des Plakats (22) hintergreift.

2. Nutzfahrzeugwechselplakateinrichtung nach Anspruch 1, **dadurch gekennzeichnet, dass** das Plakat (22) durch einen in eine Kedernut (35) der Schiene (34) eingreifenden Kederrand (33) an die Schiene (34) angeschlossen ist.

3. Nutzfahrzeugwechselplakateinrichtung nach Anspruch 2, **dadurch gekennzeichnet, dass** die Schiene (34) an dem Plakat (22) durch eine lösbare Kederbremse (44) unverlierbar gehalten ist, wobei die Kederbremse (44) durch einen in einer Ausklinkung des Kederrandes (33) des Plakats (22) eingesetztes und in der Kedernut (35) verspannbares Element gebildet ist.

4. Nutzfahrzeugwechselplakateinrichtung nach Anspruch 3, **dadurch gekennzeichnet, dass** die Kederbremse einen zylindrischen Körper (45) mit einem Durchmesser, der größer ist als die lichte Weite der Einsatzöffnung der Kedernut (34), und eine den Körper (45) durchdringende und in diesem gehaltene Feststellschraube (47) umfasst.

5. Nutzfahrzeugwechselplakateinrichtung nach einem der Ansprüche 1 bis 4, **dadurch gekennzeichnet, dass** die Horizontalspanneinrichtung über zwei Planenspanner (24) verfügt.

6. Nutzfahrzeugwechselplakateinrichtung nach einem der Ansprüche 1 bis 5, **dadurch gekennzeichnet, dass** der oder die Planenspanner (24) der Horizontalspanneinrichtung hinsichtlich des Abstandes des Hakenelementes (28) zu der Stelle ihrer Anbindung oder Festlegung einrichtbar sind.

7. Nutzfahrzeugwechselplakateinrichtung nach Anspruch 6, **dadurch gekennzeichnet, dass** das Hakenelement (28) Teil eines Grundmoduls des Planenspanners (24) ist, das wiederum mittels einer Gewindespindel (30) mit dem Befestigungselement (31) zum Anbinden oder Festlegen des Planenspanners (24) verbunden ist.

8. Nutzfahrzeugwechselplakateinrichtung nach einem der Ansprüche 1 bis 7, **dadurch gekennzeichnet, dass** das Festlager (6, 39) im Bereich des hinteren Abschlusses einer parallel zur Längserstrekkung des Aufbaus (1, 20) verlaufenden Seitenfläche (5, 23) angeordnet ist.

9. Nutzfahrzeugwechselplakateinrichtung nach einem der Ansprüche 1 bis 8, **dadurch gekennzeichnet, dass** der dem Festlager (6, 39) zugeordnete Randabschnitt des Plakats (3, 22) ein Kederrand (8) ist, der in einer dem Festlager zugeordneten Kederschiene (6, 40) gehalten ist.

10. Nutzfahrzeugwechselplakateinrichtung nach Anspruch 9, **dadurch gekennzeichnet, dass** die Kederschiene (40) am Fahrzeugaufbau (20) lösbar festgelegt ist.

11. Nutzfahrzeugwechselplakateinrichtung nach Anspruch 10, **dadurch gekennzeichnet, dass** das Festlager neben der Kederschiene (40) eine am Fahrzeugaufbau (20) befestigte Montageschiene (42) umfasst, an der die Kederschiene (40) festlegbar ist.

12. Nutzfahrzeugwechselplakateinrichtung nach Anspruch 11, **dadurch gekennzeichnet, dass** die Kederschiene (40) einen Hakenabschnitt (41) aufweist, der zum Festlegen der Kederschiene (40) an der Montageschiene (42) einen freien Schenkel (43) der Montageschiene (42) hintergreift.

13. Nutzfahrzeugwechselplakateinrichtung nach einem der Ansprüche 1 bis 12, **dadurch gekennzeichnet, dass** das Plakat eine flexible Plane ist.

14. Kofferaufbau für ein Nutzfahrzeug, **dadurch gekennzeichnet, dass** der Kofferaufbau zumindest eine Nutzfahrzeugwechselplakateinrichtung nach einem der Ansprüche 1 bis 13 aufweist.

## Claims

1. Commercial vehicle panel-changing system for a commercial vehicle body (1, 20), in particular a van body, and a device for tensioning a poster (3, 22) or the like on an outside of the vehicle body (20), wherein the poster (3, 22) is held in longitudinal extension of the body (20) by way of its one end in a fixed bearing (6, 39) and by way of its other end, situated opposite the end of the poster (3, 22) that is fixed in the fixed bearing (6, 39), connected to a horizontal tensioning device (24) for tensioning the poster (3, 22), fixed by way of its one end in the fixed bearing (6, 39), in the horizontal direction and the horizontal tensioning device (24) is associated with the end face (10, 19) of the body (1, 20) in the direction of travel and consequently the poster (3, 22) is guided around the edge (18) of the side face (5, 23) of the body (1, 20) pointing in the direction of travel, **characterized in that** the horizontal tensioning device includes at least one tarpaulin tensioning means (24) having a hook element (28) for connecting the poster (22) to the vehicle body (20) and for tensioning the poster (22) and the at least one tarpaulin tensioning means (24) is secured to the body (20) of the vehicle and **in that** at the edge of the poster (22) to be engaged with the hook element (28) of the tarpaulin tensioning means (24) said tensioning means is connected to a rail (34) by way of a hooking-in portion (36), the hook element (28) of the tarpaulin tensioning means (24|) engaging behind said hooking-in portion (36) of the tarpaulin tensioning means (24) for tensioning the poster (22).

2. Commercial vehicle panel-changing system according to Claim 1, **characterized in that** the poster (22) is connected to the rail (34) by means of a welt edge (33) engaging in a welt groove (35) of the rail (34).

3. Commercial vehicle panel-changing system according to Claim 2, **characterized in that** the rail (34) is non-detachably held at the poster (22) by means of a detachable welt brake (44), wherein the welt brake (44) is formed by an element, which is inserted in a notch of the welt edge (33) of the poster (22) and is clampable in the welt groove (35).

4. Commercial vehicle panel-changing system according to Claim 3, **characterized in that** the welt brake includes a cylindrical body (45) with a diameter that is greater than the clearance of the insert opening of the welt groove (34), and a locking screw (47) which penetrates the body (45) and is held therein.

5. Commercial vehicle panel-changing system according to one of Claims 1 to 4, **characterized in that** the horizontal tensioning device has two tarpaulin tensioning means (24).

6. Commercial vehicle panel-changing system according to one of Claims 1 to 5, **characterized in that** the one tarpaulin tensioning means or both tarpaulin tensioning means (24) of the horizontal tensioning device can be set up with regard to the spacing between the hook element (28) and the position of its attachment or securement.

7. Commercial vehicle panel-changing system according to Claim 6, **characterized in that** the hook element (28) is part of a basic module of the tarpaulin tensioning means (24), which, in its turn, is connected by means of a threaded spindle (30) to the securing element (31) for the attachment or securement of the tarpaulin tensioning means (24).

8. Commercial vehicle panel-changing system according to one of Claims 1 to 7, **characterized in that** the fixed bearing (6, 39) is located in the region of the rear closure of a side face (5, 23) that extends parallel to the longitudinal extension of the body (1, 20).

9. Commercial vehicle panel-changing system according to one of Claims 1 to 8, **characterized in that** the edge portion of the poster (3, 22) associated with the fixed bearing (6, 39) is a welt edge (8), which is held in one of the welt rails (6, 40) associated with the fixed bearing.

10. Commercial vehicle panel-changing system according to Claim 9, **characterized in that** the welt rail (40) is detachably secured to the vehicle body (20).

11. Commercial vehicle panel-changing system according to Claim 10, **characterized in that** in addition to the welt rail (40) the fixed bearing includes a mounting rail (42) secured to the vehicle body (20), to which the welt rail (40) can be secured.

12. Commercial vehicle panel-changing system according to Claim 11, **characterized in that** the welt rail (40) has a hook portion (41), which engages behind a free portion (43) of the mounting rail (42) for securing the welt rail (40) to the mounting rail (42).

13. Commercial vehicle panel-changing system according to one of Claims 1 to 12, **characterized in that** the poster is a flexible tarpaulin.

14. Vehicle body for a commercial vehicle, **characterized in that** the vehicle body has at least one commercial vehicle panel-changing system according to one of Claims 1 to 13.

## Revendications

1. Dispositif à affiches interchangeables pour véhicule utilitaire pour une structure (1, 20) de véhicule utilitaire, notamment une structure de coffre et un dispositif pour tendre une affiche (3, 22) ou similaire sur la face extérieure d'une structure (20) de véhicule utilitaire, l'affiche (3, 22) étant maintenue dans le sens de l'étendue longitudinale de la structure (20) par l'une de ses extrémités dans un palier fixe (6, 39) et étant reliée par son autre extrémité opposée à l'extrémité de l'affiche (3, 22) maintenue dans un palier fixe (6, 39), à un dispositif tendeur horizontal (24) destiné à tendre l'affiche (3, 22) maintenue par l'une de ses extrémités dans le palier fixe (6, 39) dans le sens horizontal et le dispositif tendeur horizontal (24) étant affecté à la face frontale (10, 19) avant de la structure (1, 20) dans le sens du déplacement, et l'affiche (3, 22) étant ainsi guidée autour du coin (18) orienté dans le sens du déplacement, de la face latérale (5, 23) de la structure (1, 20) **caractérisé en ce que** le dispositif tendeur horizontal comprend au moins un tendeur de bâche (24) muni d'un élément à crochet (28), destiné à solidariser l'affiche (22) à la structure (20) du véhicule et destiné à tendre l'affiche (22) et que cet au moins un tendeur de bâche (24) est solidarisé à la structure (20) du véhicule et **en ce que** le bord de l'affiche (22) à saisir avec l'élément à crochet (28) du tendeur de bâche (24) est raccordé à un rail (34) par une jambe de crochetage (36) qui saisit par l'arrière l'élément à crochet (28) du tendeur de bâche (24) afin de tendre l'affiche (22).

2. Dispositif à affiches interchangeables pour véhicule utilitaire selon la revendication 1 **caractérisé en ce que** l'affiche (22) est solidarisée avec le rail (34) par un rebord à bourrelet (33) s'engageant dans une rainure à bourrelet (35) du rail (34).

3. Dispositif à affiches interchangeables pour véhicule utilitaire selon la revendication 2 **caractérisé en ce que** le rail (34) est solidarisé sans risque de perte à l'affiche (22) par un frein de bourrelet (44) amovible, le frein de bourrelet (44) étant conformé par un élément engagé dans un évidement du bord à bourrelet (33) de l'affiche (22) et tendu dans la rainure à bourrelet (35).

4. Dispositif à affiches interchangeables pour véhicule utilitaire selon la revendication 3 **caractérisé en ce que** le frein à bourrelet comprend un corps (45) cylindrique dont le diamètre est plus grand que la largeur de l'ouverture d'engagement de la rainure à bourrelet (34) et une vis de fixation (47) traversant ce corps (45) et maintenue dans ce dernier.

5. Dispositif à affiches interchangeables pour véhicule utilitaire selon l'une des revendications 1 à 4 **caractérisé en ce que** le dispositif tendeur horizontal dispose de deux tendeurs de bâche (24).

6. Dispositif à affiches interchangeables pour véhicule utilitaire selon l'une des revendications 1 à 5 **caractérisé en ce que** le ou les tendeurs de bâche (24) du dispositif tendeur horizontal sont réglables en ce qui concerne l'intervalle entre l'élément à crochet (28) et l'emplacement de leur maintien ou de leur fixation.

7. Dispositif à affiches interchangeables pour véhicule utilitaire selon la revendication 6 **caractérisé en ce que** l'élément à crochet (28) est une partie du module de base du tendeur de bâche (24), à son tour relié à l'aide d'une broche filetée (30) à l'élément de fixation (31) afin de maintenir ou de fixer le tendeur de bâche (24).

8. Dispositif à affiches interchangeables pour véhicule utilitaire selon l'une des revendications 1 à 7 **caractérisé en ce que** le palier fixe (6, 39) est disposé au niveau de la terminaison arrière d'une surface latérale (5, 23) s'étendant parallèlement à l'étendue longitudinale de la structure (1, 20).

9. Dispositif à affiches interchangeables pour véhicule utilitaire selon l'une des revendications 1 à 8 **caractérisé en ce que** la partie en bordure de l'affiche (3, 22) affectée au palier fixe (6, 39) est un bord à bourrelet (8), maintenu dans un rail à bourrelet (6, 40) affecté au palier fixe.

10. Dispositif à affiches interchangeables pour véhicule utilitaire selon la revendication 9 **caractérisé en ce que** le rail à bourrelet (40) est fixé de façon amovible sur la structure (20) de véhicule utilitaire.

11. Dispositif à affiches interchangeables pour véhicule utilitaire selon la revendication 10 **caractérisé en ce que** le palier fixe à côté du rail à bourrelet (40) comprend un rail de montage (42) fixé sur la structure (20) de véhicule utilitaire, sur lequel le rail à bourrelet (40) peut être fixé.

12. Dispositif à affiches interchangeables pour véhicule utilitaire selon la revendication 11 **caractérisé en ce que** le rail à bourrelet (40) présente un tronçon à crochet (41) qui saisit par l'arrière un montant (43) libre du rail de montage (42) afin de fixer le rail à bourrelet (40) sur le rail de montage (42).

13. Dispositif à affiches interchangeables pour véhicule utilitaire selon l'une des revendications 1 à 12 **caractérisé en ce que** l'affiche est une bâche souple.

14. Structure de coffre pour un véhicule utilitaire **caractérisé en ce que** la structure de coffre présente au moins un dispositif à affiches interchangeables pour véhicule utilitaire selon l'une des revendications 1 à 13.
